# EUROPEAN PATENT SPECIFICATION

(11) **EP 0 890 465 B1**
(45) Date of publication and mention of the grant of the patent: **29.01.2003**
(21) Application number: 98830401.0
(22) Date of filing: 01.07.1998
(51) Int. Cl.: B60J 7/06

(54) **Connecting device for arcs of accordion-coverings and covering including said device**
Anschlussvorrichtung für Akkordeon-Abdeckungsbogen und Abdeckungen mit dieser Vorrichtung
Dispositif de raccordement pour arc de bâche-accordéon et bâche avec ce dispositif

(30) Priority: 08.07.1997 IT MI971620; 17.12.1997 IT MI972792
(43) Date of publication of application: 13.01.1999
(73) Proprietor: Donà, Severino, 20090 Caleppio di Settala (MI) (IT)
(72) Inventor: Donà, Severino, 20090 Caleppio di Settala (MI) (IT)
(74) Representative: Pizzoli, Pasquale Vincenzo

(56) References cited:
- EP-A- 0 140 100
- WO-A-97/32745
- DE-A- 19 725 812
- DE-U- 29 608 103
- FR-A- 2 662 652

## Description

The present invention relates to a connecting device for arcs of accordion-coverings, as well as an accordion-covering having their arcs connected through said device.

It is known, for example from WO 97/32745, that the accordion-coverings fixed to the ground or mounted on transport means, such as trucks or road trains, generally include a plurality of mobile arcs having their ends secured on a pair of carriages sliding along longitudinal guides. These arcs are used to support a tarpaulin which acts as a covering when the arcs are spaced and which can be folded accordion-like by gathering said arcs at one end of said guides.

In order to make the tarpaulin fold accordion-like outside the arcs, and not inside them, known accordion-coverings include some connecting devices made up of two arms mutually pivoted at one end thereof. Each of the two free ends of these connecting devices is in turn pivoted onto a carriage of two contiguous arcs. In this way, when two arcs are side by side, the two arms of each device rotate towards the outside of the covering reaching a substantially vertical position and raising the portion of tarpaulin between the two arcs.

In order to reduce the manufacturing costs of said connecting devices, WO 97/32745 devised the possibility of making them in a single piece of plastic material, wherein the function of the pivots is carried out by a plurality of transverse grooves at which said piece bends when the arcs are brought mutually close.

However, said transverse grooves provide a certain resilience to the bending points, whereby said known connecting device tends to expand when bent and thus to inconveniently open the accordion-covering. Another drawback of said known connecting device is given by the fact that after a certain number of bendings it tends to break at the points where the grooves are formed.

Therefore the object of the present invention is to provide a connecting device free from said drawbacks, namely a connecting device which not only has a low manufacturing cost but is also resistant to wear and can be perfectly bent. This object is achieved through a connecting device having its main features defined in the first claim.

Thanks to the use of flexible bands stiffened in at least two portions, the connecting device according to the present invention is particularly resistant to wear and can be produced in the same place and with the same machinery used for the production of tarpaulins, with a subsequent economical saving.

According to a further aspect of the present invention, the length of band between two stiffened portions is less flexible than the length between the stiffened portions and the arcs of the accordion-covering. In this way, an optimal folding of the covering is obtained upon the opening thereof.

In an alternative embodiment of the present invention, the stiffening of the flexible band is carried out by applying portions of the band itself. Said bands and band portions can be obtained from the production scrap of the tarpaulins, with a subsequent further decrease in the manufacturing cost.

Further advantages and characteristics of the connecting device according to the present invention will be clear to those skilled in the art from the following detailed description of an exemplary embodiment thereof, with reference to the annexed drawings wherein:
- Fig. 1 shows a perspective view from below of a length of the device according to a first embodiment of the present invention;
- Fig.2 shows a partial longitudinally sectional view of an accordion-covering including the device of fig.1;
- Fig.3 shows a perspective view from below of a second embodiment of the device according to the present invention; and
- Fig.4 shows a perspective view from below of a length of the device according to a third embodiment of the present invention.

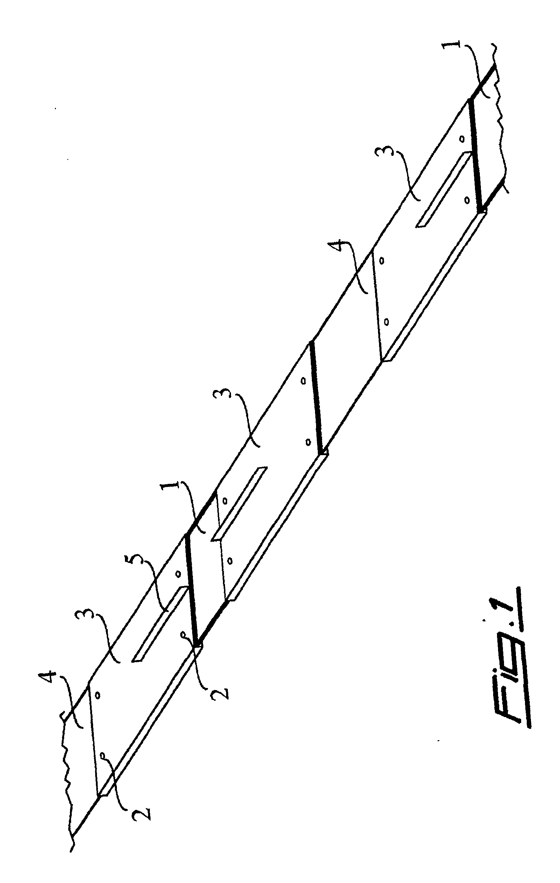

With reference to fig. 1, there is seen that the connecting device according to the present invention includes a flexible band 1 about 5 mm thick and preferably made up of two joined rubberized fabrics. The ends of said band are introduced and secured, e.g. by a pair of rivets 2, into one of the two slots formed in both smaller lateral surfaces of a pair of rigid members 3 having a substantially parallelepiped shape and made from a plastic material. The free length of band 1 is about 40 mm, while each rigid member is about 185 mm long. In the empty slot of each rigid member 3 there is inserted the end of two further flexible bands 4 about 4 mm thick and preferably consisting of a rubberized fabric. The free ends of the flexible bands 4 are introduced into the lateral slot of other two rigid members, one of which is shown in the figure, and so on.

In this way there is obtained an alternate sequence of bands 1, less flexible in that they are thicker, and bands 4, more flexible in that they are less thick, all connected by rigid members 3. The free length of band 4 is about 140 mm and the lower surface of the rigid members 3 is provided with a spacer 5 consisting of a rectangular or trapezoidal fin used to keep the rigid members raised and aligned, as it will be explained further on.

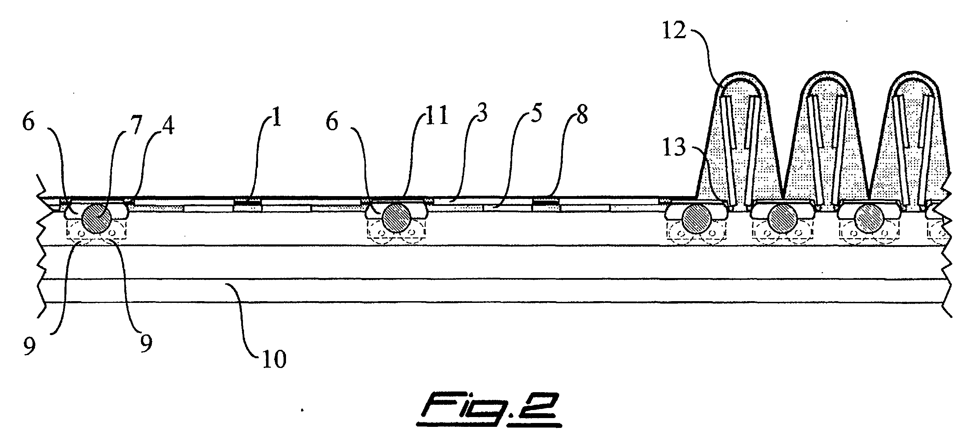

Referring now to fig.2, there is seen that the central portions of the further flexible bands 4 of the connecting device according to the present embodiment of the invention are secured to the carriages 6 located at each end of two contiguous arcs 7 cooperating in supporting the tarpaulin 8 of an accordion-covering. Each carriage 6 is provided with a plurality of wheels 9 (indicated by a dotted line) for sliding on a longitudinal guide 10 supporting arcs 7. Over each portion of the further flexible band 4 overlapping a carriage 6 there is preferably applied a rigid plate 11 locking the band on the carriage and preventing its bending. The spacers 5 abut on the longitudinal guide 10 so as to keep the rigid members 3 aligned.

During the use, when arcs 7 are brought mutually close during the opening of the accordion-covering, the rigid members 3 rotate upwards while lifting tarpaulin 8, which folds accordion-like since it is secured to carriages 6 of arcs 7. The flexible band 1, being thicker than the further flexible band 4, bends and forms arches 12 so that the pairs of rigid members 3 are divergent upwards with an angle of about 20°. By this arrangement, the connecting device according to the present invention is prevented, upon compression, from tending to mutually separate carriages 6 like a spring. The further flexible band 4, being less thick than the flexible band 1, bends easily and forms a downward loop 13 in the space between two carriages 6. By this arrangement, the total length of the two portions of the connecting device is suitably reduced upon compression, so as to prevent the overlying tarpaulin 8 from being pulled during the folding, with a subsequent risk of tearing due to wear.

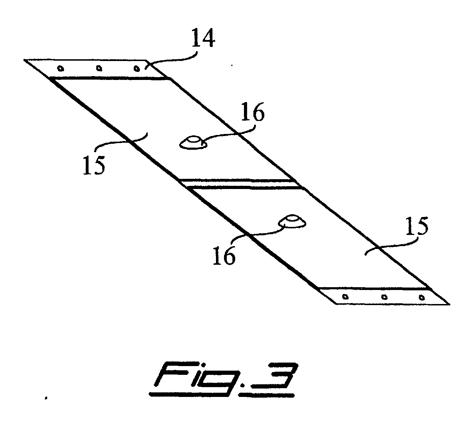

Referring now to fig.3, there is seen that a second embodiment of the connecting device according to the present invention, simpler and cheaper than the preceding one, includes a flexible band 14 preferably of the same plastic-coated material used to make the tarpaulins for accordion-coverings. The length of said band is almost equal to the length of the whole covering divided by the number of arcs belonging thereto plus one, so that when the covering is extended each connecting device is extended between two arcs.

The band 14 is properly stiffened by applying thereto, e.g. by welding, two pieces of subberized material, in particular two band portions 15 preferably of the same material and thickness of band 14, but shorter than the latter. Between these portions 15, in the middle of band 14, there is a short central unstiffened band portion, which corresponds to the point where the band must bend when the arcs are brought mutually close. Also the ends of band 14 are not stiffened by the band portions 15, but are preferably provided with a plurality of holes, in particular three holes at each end; used to secure band 14 to the arcs to be connected. Each band portion 15 can be provided, about at a central position, with a spacer 16 used to keep band 14 raised, as explained above.

During the use, the band portions 15 are preferably arranged below baud 14 whereby they expand upwards and not downwards, as it would be natural due to the gravity force, upon being compressed when arcs 7 are brought mutually close.

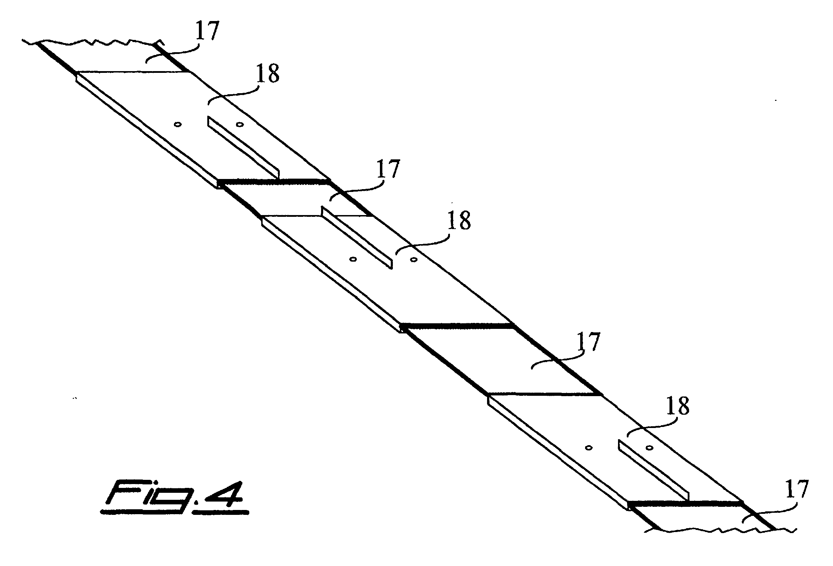

Referring finally to fig.4, there is seen that a further embodiment of the present invention includes a single flexible band 17 connecting more arcs of the accordion-covering. Said flexible band is passed through the two slots of a plurality of rigid members 18 of the above-described type, thus obtaining a sequence of rigid members connected by a single flexible band. By this arrangement, the adaptation to an accordion-covering of the connecting device according to the present invention is made easier, since the rigid members 18 can be shifted and then secured to the flexible band 17 even after the latter has been secured to the arcs of the covering.

It is obvious that other embodiments of the connecting device according to the present invention may include more pairs of rigid members connected by flexible bands, so as to obtain a bellows having a greater number of pleats and/or connections between more than two contiguous arcs. In this latter instance the length of the connecting device must obviously be increased by the number of additional arcs to be connected together.

## Claims

1. Connecting device for arcs (7) of accordion-coverings, **characterized in that** it includes at least two separate stiffened portions (3, 15, 18) of substantially equal length mutually connected by at least one flexible band (1, 14, 17).

2. Connecting device according to the preceding claim, **characterized in that** it includes at least two rigid members (3, 18) connected by said flexible band (1, 17).

3. Connecting device according to the preceding claim, **characterized in that** each of the two rigid members (3) is connected to an arc (7) of the accordion-covering through a further flexible band (4).

4. Connecting device according to the preceding claim, **characterized in that** the thickness of the flexible band (1) connecting two rigid members (3) is greater than the thickness of the further flexible bands (4) connecting said rigid members (3) to the arcs (7) of the accordion-covering.

5. Connecting device according to one of the preceding claims, **characterized in that** it includes a plurality of pairs of rigid members (3) each connected through one flexible band (1), wherein at least one rigid member (3) of each pair is connected to a rigid member of another pair through a further flexible band (4).

6. Connecting device according to one of claims 2 to 5 **characterized in that** at least one spacer (5) is provided below the rigid members (3, 18).

7. Connecting device according to claim 1, **characterized in that** the stiffened portions (3, 15, 18) belong to the flexible band (14) which is stiffened by applying at least two portions of band (15) having substantially the same length.

8. Connecting device according to the preceding claim, **characterized in that** the band portions (15) are applied on the lower face of the band (14) to be stiffened.

9. Connecting device according to the preceding claim, **characterized in that** it includes at least a spacer (16) applied below each of said band portions (15).

10. Accordion-covering **characterized in that** it includes a plurality of arcs (7) connected through at least one connecting device according to one of the preceding claims.

## Patentansprüche

1. Anschlussvorrichtung für Akkordeonabdeckungsbögen (7), **dadurch gekennzeichnet, dass** sie wenigstens zwei im Wesentlichen gleich lange, getrennte versteifte Teile (3, 15, 18) umfasst, die durch mindestens ein flexibles Band (1, 14, 17) miteinander verbunden sind.

2. Anschlussvorrichtung nach dem vorhergehenden Anspruch, **dadurch gekennzeichnet, dass** sie mindestens zwei starre Bauteile (3, 18) umfasst, die durch das flexible Band (1, 17) miteinander verbunden sind.

3. Anschlussvorrichtung nach dem vorhergehenden Anspruch, **dadurch gekennzeichnet, dass** jedes der zwei starren Bauteile (3) durch ein weiteres flexibles Band (4) mit einem Bogen (7) der Akkordeonabdeckung verbunden ist.

4. Anschlussvorrichtung nach dem vorhergehenden Anspruch, **dadurch gekennzeichnet, dass** die Dicke des flexiblen Bandes (1), das zwei starre Bauteile (3) miteinander verbindet, größer als die Dicke der weiteren flexiblen Bänder (4) ist, welche die starren Bauteile (3) mit den Bögen (7) der Akkordeonabdeckung verbinden.

5. Anschlussvorrichtung nach einem der vorhergehenden Ansprüche, **dadurch gekennzeichnet, dass** sie eine Vielzahl von Paaren aus starren Bauteilen (3) umfasst, die jeweils durch ein flexibles Band (1) miteinander verbunden sind, wobei mindestens ein starres Bauteil (3) eines jeden Paars durch ein weiteres flexibles Band (4) mit einem starren Bauteil eines anderen Paars verbunden ist.

6. Anschlussvorrichtung nach einem der Ansprüche 2 bis 5, **dadurch gekennzeichnet, dass** mindestens ein Abstandshalter (5) unter den starren Bauteilen (3, 18) vorgesehen ist.

7. Anschlussvorrichtung nach Anspruch 1, **dadurch gekennzeichnet, dass** die versteiften Teile (3, 15, 18) zu dem flexiblen Band (14) gehören, das durch die Anbringung von mindestens zwei im Wesentlichen gleich langen Bauteilen (15) versteift ist.

8. Anschlussvorrichtung nach dem vorhergehenden Anspruch, **dadurch gekennzeichnet, dass** die Bandteile (15) an der Unterseite des zu versteifenden Bandes (14) angebracht sind.

9. Anschlussvorrichtung nach dem vorhergehenden Anspruch, **dadurch gekennzeichnet, dass** sie mindestens einen Abstandshalter (16) umfasst, der unter jedem der Bandteile (15) angebracht ist.

10. Akkordeonabdeckung, **dadurch gekennzeichnet, dass** sie eine Vielzahl von Bögen (7) umfasst, die durch mindestens eine Anschlussvorrichtung nach einem der vorhergehenden Ansprüche miteinander verbunden sind.

## Revendications

1. Dispositif de raccordement pour des arcs (7) de couvertures accordéons, **caractérisé en ce qu'**il comporte au moins deux portions renforcées séparées (3, 15, 18) de longueur sensiblement égale, raccordées ensemble par au moins une bande souple (1, 14, 17).

2. Dispositif de raccordement selon la revendication précédente, **caractérisé en ce qu'**il comporte au moins deux éléments rigides (3, 18) raccordés par ladite bande souple (1, 17).

3. Dispositif de raccordement selon la revendication précédente, **caractérisé en ce que** chacun des deux éléments rigides (3) est raccordé à un arc (7) de la couverture accordéon par l'intermédiaire d'une autre bande souple (4).

4. Dispositif de raccordement selon la revendication précédente, **caractérisé en ce que** l'épaisseur de la bande souple (1) raccordant les deux éléments rigides (3) est supérieure à l'épaisseur des autres bandes souples (4) raccordant lesdits éléments rigides (3) aux arcs (7) de la couverture accordéon.

5. Dispositif de raccordement selon l'une des revendications précédentes, **caractérisé en ce qu'**il comporte une pluralité de paires d'éléments rigides (3), chacun étant raccordé par l'intermédiaire d'une bande souple (1), dans lequel au moins un élément rigide (3) de chaque paire est raccordé à un élément rigide d'une autre paire par l'intermédiaire d'une autre bande souple (4).

6. Dispositif de raccordement selon l'une des revendications 2 à 5, **caractérisé en ce que** au moins une entretoise (5) est disposée sous les éléments rigides (3, 18).

7. Dispositif de raccordement selon la revendication 1, **caractérisé en ce que** les portions renforcées (3, 15, 18) appartiennent à la bande souple (14) qui est renforcée par l'application d'au moins deux portions de bande (15) ayant sensiblement la même longueur.

8. Dispositif de raccordement selon la revendication précédente, **caractérisé en ce que** les portions de bande (15) sont appliquées sur la surface inférieure de la bande (14) à renforcer.

9. Dispositif de raccordement selon la revendication précédente, **caractérisé en ce qu'**il comporte au moins une entretoise (16) appliquée sous chacune desdites portions de bande (15).

10. Couverture accordéon **caractérisée en ce qu'**elle comporte une pluralité d'arcs (7) raccordés par l'intermédiaire d'au moins un dispositif de raccordement selon l'une des revendications précédentes.
